# EUROPÄISCHE PATENTSCHRIFT

(11) **EP 0 625 107 B1**
(45) Veröffentlichungstag und Bekanntmachung des Hinweises auf die Patenterteilung: **09.04.1997**
(21) Anmeldenummer: 93903227.2
(22) Anmeldetag: 23.01.1993
(51) Int. Cl.: B60T 8/36, B60T 13/68, F16K 31/06

(54) **ELEKTROMAGNETVENTIL, INSBESONDERE FÜR HYDRAULISCHE BREMSANLAGEN MIT SCHLUPFREGELUNG**
SOLENOID VALVE FOR, IN PARTICULAR, HYDRAULIC BRAKE SYSTEMS WITH SLIP CONTROL
ELECTROVANNE, NOTAMMENT POUR DES SYSTEMES DE FREINAGE HYDRAULIQUES AVEC REGULATION ANTIPATINAGE

(30) Priorität: 14.02.1992 DE 4204417
(43) Veröffentlichungstag der Anmeldung: 23.11.1994
(73) Patentinhaber: ITT Automotive Europe GmbH, 60488 Frankfurt am Main (DE)
(72) Erfinder: LAUER, Josef, D-6696 Nonnweiler (DE)
(86) Internationale Anmeldenummer: EP9300152
(87) Internationale Veröffentlichungsnummer: WO9315941

(56) Entgegenhaltungen:
- EP-A- 0 355 055
- EP-A- 0 492 109
- DE-A- 4 028 447

## Beschreibung

Die Erfindung betrifft ein Elektromagnetventil, insbesondere für hydraulische Bremsanlagen mit Schlupfregelung, nach dem Oberbegriff des Anspruchs 1.

Bei dem Elektromagnetventil nach DE 40 28 447 A1 hat es sich gezeigt, daß die Überdruckventilfunktion bei Nichteinhaltung eines exakten Passungsspiel in der Ventilnadelführung des Magnetankers beeinträchtigt werden kann, wobei die lange Ventilnadelführung im Magnetanker nicht unerhebliche Reibkräfte entstehen läßt. Als weiterer Nachteil stellen sich bei einer etwaigen toleranz- oder verschleißbedingten Abstandsänderung zwischen dem Ventilschließglied und dem Ventilsitz Undichtigkeiten ein.

Aus der EP-A-355 055 ist ein Elektromagnetventil bekannt, das im Magnetanker einen unter Wirkung einer relativ steifen Druckfeder eingespannten Ventilstößel aufweist, der mit einer Ventilnadel zusammenwirkt. Der Ventilstößel gelangt mit seinem ersten Endabschnitt an einen die Ventilhülse umschließenden Stopfen auf Anschlag, der über den Ventilstößel den Magnetanker gegenüber dem Magnetkern auf ein definiertes Spaltmaß justiert. Das Spaltmaß ist derart gewählt, daß in der Schließstellung der Ventilnadel am Ventilsitz ein Mindestspaltmaß (Magnetankerluftspalt) zwischen den Stirnflächen des Magnetankers und des Magnetkerns verbleibt, um einerseits ein sicheres Schließen des Ventils zu gewährleisten und um andererseits zur vollen Ausnutzung der elektromagnetischen Stellkraft das Mindestspaltmaß auf ein Minimum zu beschränken, wozu sich der Magnetanker relativ zum Ventilstößel um das Maß des noch verbliebenen Restluftspaltes verschieben kann.

Daher liegt der Erfindung die Aufgabe zu Grunde, ein Elektromagnetventil mit integrierter Überdruckventilfunktion derart zu verbessern, daß unter Umgehung der vorgenannten Nachteile eine präzise, reibungsminimierte und leicht einzustellende Ventilnadelbetätigung ermöglicht ist, die ein exaktes, sicheres Schließen der Ventilnadel gewährleistet.

Diese Aufgabe wird erfindungsgemäß durch die kennzeichnenden Merkmale des Patentanspruchs 1 gelöst, wonach sich die Stufenbohrung im Magnetanker über nahezu die gesamte Länge des Magnetankers erstreckt, wobei ein nahezu scheibenförmig die Ventilnadel umgreifender Endbereich innerhalb des Magnetankers die Ventilnadel führt, wobei in der Ventilschließstellung ein an der Ventilnadel angebrachter erster Anschlag entgegen der Wirkung einer im Magnetanker befindlichen Druckfeder in Ventilöffnungsrichtung vom Absatz einer Bohrungsstufe des Magnetankers um einen Axialabstand abgehoben ist und wobei in der Ventilschließstellung zwischen dem Magnetanker und dem Magnetkern eine nicht ferromagnetische Scheibe eingespannt ist, an der eine am Magnetkern abgestützte Rückstellfeder anliegt.

Die Erfindung basiert somit auf dem Gedanken, die Ventilnadel möglichst reibungsarm im Magnetanker zu führen und exakt in die Schließstellung zu schalten.

Weitere Merkmale, Vorteile und Anwendungsmöglichkeiten der vorliegenden Erfindung ergeben sich aus den Unteransprüchen sowie aus der nachfolgenden Beschreibung eines Ausführungsbeispiels anhand einer Zeichnung.

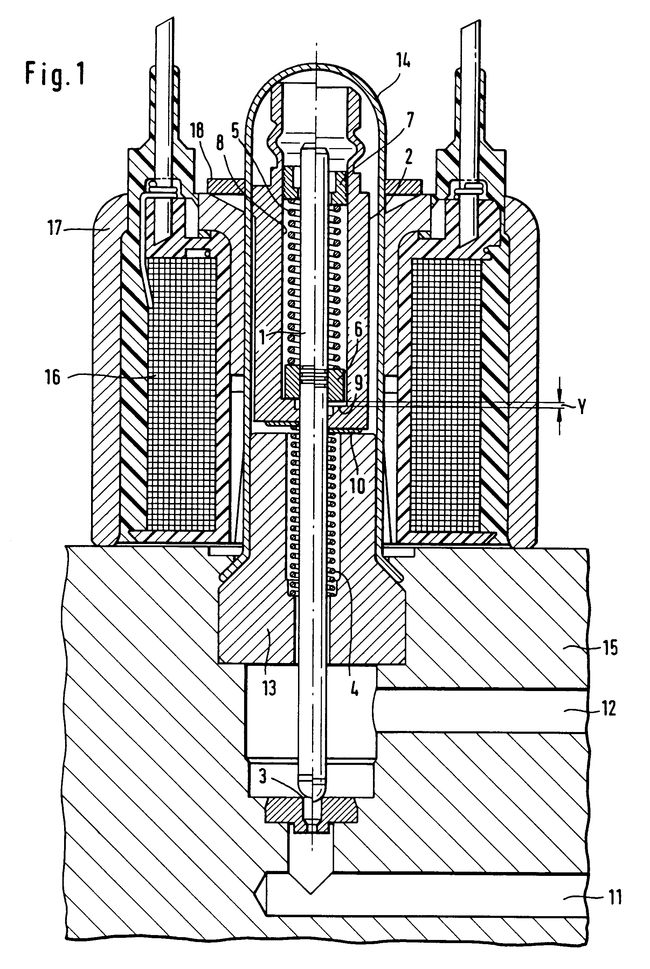

Die Figur 1 zeigt im Querschnitt ein Elektromagnetventil in der unbetätigten (linken Ventilansicht) und in der betätigten Ventilschaltstellung (rechte Ventilansicht). Der Magnetkern 13 ist mit dem relativ dünnwandig gezogenen Ventildom 14 im Ventilgehäuse 15 verstemmt gehalten, wobei die über den Ventildom 14 gestülpte Magnetspule 16 mittels einem am Spulengehäuse 17 und am Ventildom 14 anliegenden Klemmring 18 befestigt ist. In der linken Darstellung nach Figur 1 befindet sich die in der Stufenbohrung 8 des Magnetankers 2 geführte Ventilnadel 1 in der elektromagnetisch nicht erregten, auf Druckmitteldurchlaß geschalteten Grundstellung, so daß über den Ringspalt zwischen dem Ventilsitz 3 und der Ventilnadel 1 eine offene Druckmittelverbindung zwischen dem ersten und zweiten Druckmittelkanal 11, 12 und damit auch zu dem in der Abbildung nicht näher dargestellten Verbraucher, beispielsweise einer schlupfgeregelten Radbremse, besteht. Lediglich die zwischen dem Magnetkern 13 und dem Magnetanker 2 eingespannte Rückstellfeder 4 sorgt für das Abheben der Ventilnadel 1 vom Ventilsitz 3 in der elektromagnetisch nicht erregten Grundstellung. Eine zweite, in der koaxialen Stufenbohrung 8 des Magnetankers 2 angeordnete Druckfeder 5, hält abgestützt an einem im Magnetanker 2 verpreßt befestigten (zweiten) Anschlag 7 die Ventilnadel in der abbildungsgemäßen, links zur Ventilmittelachse gezeigten Grundstellung. Ferner ist zwischen der Stirnfläche des Magnetankers 2 und des Magnetkerns 13 eine nicht ferromagnetische Scheibe 10 angeordnet, die das unerwünschte und hinreichend bekannte "Festkleben" des Magnetankers 2 am Magnetkern 13 verhindert. Ferner zeigt die Figur 1 rechts der Ventilmittelachse gelegen, die bewegbaren Ventilteile in der elektromagnetisch erregten Stellung, die nachfolgend anhand der Funktionsweise des Ventils beschrieben ist.

### Funktionsweise:

Durch die bei Strombeaufschlagung der Magnetspule 16 hervorgerufene Stellkraft verschließt die Ventilnadel 1 den Ventilsitz 3, wobei der erste Anschlag 6 mit der Ventilnadel 1 von der Bohrungsstufe 9 abhebt und die Druckfeder 5 zusammenpreßt. Die hydraulische Unterbrechung zwischen dem ersten und dem zweiten Druckmittelkanal 11, 12 ist hierdurch infolge des noch verbleibenden Reservehubs zwischen dem ersten Anschlag 6 und der Bohrungsstufe 9 jederzeit gewährleistet, unabhängig davon, ob der tatsächliche Ventilschließhub durch Fertigungstoleranzen oder beispielsweise durch Ventilsitzverschleiß eine Änderung erfährt.

Sobald der im ersten Druckmittelkanal 11 auf die Ventilnadel 1 einwirkende Druck die Vorspannkraft des im Magnetanker 2 mittels einem Einstellwerkzeug voreingestellte Druckfeder 5 überschreitet, vollzieht die Ventilnadel 1 in Abhängigkeit der Steifigkeit der Druckfeder 5, der Lagerreibkraft und der durch die Führungsspiele der Ventilnadel 1 in den beiden Anschlägen 6, 7 wirksame Ringspaltdrosselung eine Hubbewegung. Unter Bezugnahme auf die bei den hydraulischen Bremsanlage mit Antriebsschlupfregelung gebräuchliche Bremsdruckregulierung der motorangetriebenen und damit antriebsschlupfgefährdeten Fahrzeugräder kann ein im ersten Druckmittelkanal 11 unzulässig hoher Systemdruck die Ventilnadel 1 öffnen, obwohl gleichzeitig das Magnetventil in der Funktion eines ASR-Trennventils elektromagnetisch die Druckmittelverbindung zum zweiten Druckmittelkanal 12 und damit auch in Richtung des in der Abbildung nicht dargestellten Hauptzylinders normalerweise unterbricht. Der im ersten Druckmittelkanal 11 überhöht anstehende Bremsdruck gelangt somit ungehindert über den geöffneten Ventilsitz 3 in Richtung des zweiten Druckmittelkanals 12.

Damit ist auf verhältnismäßig einfache Weise ein bauteiloptimiertes Elektromagnetventil mit Überdruckventilfunktion geschaffen, das durch die Verschiebbarkeit und das anschließende Verpressen des ersten Anschlags 6 auf der Ventilnadel 1 eine genaue Einstellung eines zum sicheren Schließen der Ventilnadel 1 notwendigen Reservehubs ermöglicht und das durch die Verschiebbarkeit und das anschließende Verpressen des zweiten Anschlages 7 in der Stufenbohrung 8 des Magnetankers 2 die Vorspannkrafttoleranz der Druckfeder 5 ausgleicht. Durch den relativ großen Lagerabstand des ersten Anschlags 6 gegenüber der am anderen Ende des Magnetankers 2 gelegenen Bohrungsstufe 9 ist die Ventilnadel 1 über einen größtmöglichen Längenabschnitt im Magnetanker 2 sicher geführt und zentriert. Der an der Ventilnadel 1 beispielsweise mittels einer Einscherung befestigter erster Anschlag 6 ist hierbei mit einem relativ großzügigen Radialspiel in der Stufenbohrung 8 angeordnet.

### Bezugszeichenliste

- 1: Ventilnadel
- 2: Magnetanker
- 3: Ventilsitz
- 4: Rückstellfeder
- 5: Druckfeder
- 6: erster Anschlag
- 7: zweiter Anschlag
- 8: Stufenbohrung
- 9: Bohrungsstufe
- 10: Scheibe
- 11: erster Druckmittelkanal
- 12: zweiter Druckmittelkanal
- 13: Magnetkern
- 14: Ventildom
- 15: Ventilgehäuse
- 16: Magnetspule
- 17: Spulengehäuse
- 18: Klemmring
- Y: Axialabstand

## Patentansprüche

1. Elektromagnetventil, insbesondere für hydraulische Bremsanlagen mit Schlupfregelung, das einen von einem Ventildom (14) umschlossenen Magnetanker (2) aufweist, der in Abhängigkeit einer strombeaufschlagbaren, am Ventildom (14) angebrachten Magnetspule (16) eine Hubbewegung vollzieht, so daß eine am Magnetanker (2) angeformte und von einem Magnetkern (13) umschlossene Ventilnadel (1) mit einem in einem Ventilgehäuse (15) befestigten Ventilsitz (3) korresponiert, wobei die Ventilnadel (1) relativ zum Magnetanker (2) in dessen Stufenbohrung derart verschiebbar geführt ist, daß die in Abhängigkeit von der elektromagnetischen Stellkraft vollziehbare Hubbewegung der Ventilnadel (1) durch Einwirkung einer hydraulischen Stellkraft veränderbar ist, um den zwischen einem ersten und mindestens einem zweiten Druckmittelkanal (11, 12) anstehenden hydraulischen Druck zu regeln, dadurch **gekennzeichnet**, daß sich die Stufenbohrung (8) über nahezu die gesamte Länge des Magnetankers (2) erstreckt, daß ein nahezu scheibenförmig die Ventilnadel (1) umgreifender Endbereich des Magnetankers (2) die Ventilnadel (1) führt, daß in der Ventilschließstellung ein an der Ventilnadel (1) angebrachter erster Anschlag (6) entgegen der Wirkung einer im Magnetanker (2) befindlichen Druckfeder (5) in Ventilöffnungsrichtung vom Absatz einer Bohrungsstufe (9) des Magnetankers (2) um einen Axialabstand (Y) abgehoben ist, und daß in der Ventilschließstellung zwischen dem Magnetanker (2) und dem Magnetkern (13) eine nicht ferromagnetische Scheibe (10) eingespannt ist, an der eine am Magnetkern (13) abgestützte Rückstellfeder (4) anliegt.

2. Elektromagnetventil nach Anspruch 1, dadurch **gekennzeichnet**, daß die Druckfeder (5) zwischen dem an der Ventilnadel (1) separat befestigbaren ersten Anschlag (6) und einem in der Stufenbohrung (8) separat befestigbaren zweiten Anschlag (7) eingespannt ist.

3. Elektromagnetventil nach Anspruch 1 oder 2, dadurch **gekennzeichnet**, daß der zweite Anschlag (7) sowie die den kleineren Öffnungsquerschnitt aufweisenden Bohrungsstufe (9) über nahezu die gesamte Magnetankerlänge die Ventilnadel (1) im Magnetanker (2) zentrieren.

4. Elektromagnetventil nach mindestens einem der vorhergehenden Ansprüche, dadurch **gekennzeichnet**, daß sowohl der kleinere Öffnungsquerschnitt im Magnetanker (2) wie auch der zweite Anschlag (7) kleinflächig, vorzugsweise scheibenförmig, die Ventilnadel (1) umgreifen.

5. Elektromagnetventil nach mindestens einem der vorhergehenden Ansprüche 1 bis 5, dadurch **gekennzeichnet**, daß der zweite Anschlag (7) mittels einem Einstellwerkzeug in der Stufenbohrung (8) verschiebbar ist, und daß dieser mittels einer den Magnetanker (2) einschnürenden Radialkraft befestigbar ist.

6. Elektromagnetventil nach mindestens einem der vorhergehenden Ansprüche, dadurch **gekennzeichnet**, daß der erste Anschlag (6) auf der Ventilnadel (1) verschiebbar ist und mittels einem Preßwerkzeug an der Ventilnadel (1) fixierbar ist.

## Claims

1. An electromagnetic valve, in particular for hydraulic brake systems with slip control, including a magnet armature (2) which is enclosed by a valve dome (14) and performs a stroke movement depending on an energizable magnet coil (16) fitted to the valve dome (14), so that a valve needle (1) formed on the magnet armature (2) and encircled by a magnet core (13) interacts with a valve seat (3) fixed within a valve housing (15), wherein the valve needle (1) is guided so as to be slidable relative to the magnet armature (2) in its stepped bore, so that the stroke movement of the valve needle (1), which is adapted to be performed in response to the electromagnetic actuating force, is variable by the action of a hydraulic actuating force in order to control the hydraulic pressure prevailing between a first and at least one second pressure fluid duct (11, 12),
**characterized** in that the stepped bore (8) extends over nearly the entire length of the magnet armature (2), in that an end range of the magnet armature (2) encircling the valve needle (1) in an almost disc-shaped manner guides the valve needle (1), in that in the closed position of the valve, a first stop (6) provided on the valve needle (1) is lifted from the shoulder of a bore step (9) of the magnet armature (2) by an axial distance (Y) in the direction so as to open the valve, in opposition to the effect of a compression spring (5) provided in the magnet armature (2), and in that a non-ferromagnetic disc (10) is compressed between the magnet armature (2) and the magnet core (13) in the closed valve position, against which disc a resetting spring (4) bears that is supported on the magnet core (13).

2. An electromagnetic valve as claimed in claim 1,
**characterized** in that the compression spring (5) is compressed between the first stop (6) which can be fixed separately to the valve needle (1) and a second stop (7) which can be fixed separately within the stepped bore (8).

3. An electromagnetic valve as claimed in claim 1 or claim 2,
**characterized** in that the second stop (7) and the bore step (9) which has the smaller cross-sectional opening area centre the valve needle (1) within the magnet armature (2) over nearly the entire length of the magnet armature.

4. An electromagnetic valve as claimed in at least one of the preceding claims,
**characterized** in that both the smaller cross-sectional opening area in the magnet armature (2) and the second stop (7) encircle the valve needle (1) with a small surface area, preferably in a disc-shaped manner.

5. An electromagnetic valve as claimed in at least one of the preceding claims 1 to 5,
**characterized** in that the second stop (7) is slidable within the stepped bore (8) by means of an adjusting tool, and in that it can be fixed by means of a radial force pinching the magnet armature (2).

6. An electromagnetic valve as claimed in at least one of the preceding claims,
**characterized** in that the first stop (6) is slidable on the valve needle (1) and can be fixed to the valve needle (1) by means of a pressing tool.

## Revendications

1. Soupape électromagnétique, notamment pour des installations de freinage hydraulique avec antipatinage, qui présente un induit d'aimant (2) entouré par un dôme de soupape (14), induit qui accomplit une course en fonction d'une bobine magnétique (16) pouvant être alimentée en courant qui est installée sur le dôme de soupape (14), de sorte qu'une aiguille de soupape (1) formée sur l'induit d'aimant (2) et entourée par un noyau magnétique (13) correspond avec un siège de soupape (3) fixé dans un boîtier de soupape (15), l'aiguille de soupape (1) étant guidé en translation par rapport à l'induit d'aimant (2), dans le perçage à gradin de ce dernier, de telle sorte que la course pouvant être accomplie par l'aiguille de soupape (1) en fonction de la force de commande électromagnétique peut être modifiée sous l'action d'une force de commande hydraulique, afin de réguler la pression hydraulique régnant entre un premier canal de fluide hydraulique (11) et au moins un deuxième canal de fluide hydraulique (12), **caractérisée** en ce que le perçage à gradin (8) s'étend sur pratiquement toute la longueur de l'induit d'aimant (2), en ce qu'une région terminale quasiment en forme de rondelle de l'induit d'aimant (2) qui s'engage autour de l'aiguille de soupape (1) guide l'aiguille de soupape (1), en ce que, dans la position fermée de la soupape, une première butée (6) installée sur l'aiguille de soupape (1) est décollée d'une distance axiale (Y) du décrochement d'un gradin de perçage (9) de l'induit d'aimant (2) dans la direction d'ouverture de la soupape, contre l'action d'un ressort de pression (5) se trouvant dans l'induit d'aimant (2), et en ce que, dans la position fermée de la soupape, une rondelle non ferromagnétique (10) est serrée entre l'induit d'aimant (2) et le noyau magnétique (13), rondelle contre laquelle s'applique un ressort de rappel (4) s'appuyant contre le noyau magnétique (13).

2. Soupape électromagnétique selon la revendication 1, **caractérisée** en ce que le ressort de pression (5) est tendu entre la première butée (6), pouvant être séparément fixée sur l'aiguille de soupape (1), et une deuxième butée (7) pouvant être séparément fixée dans le perçage à gradin (8).

3. Soupape électromagnétique selon la revendication 1 ou 2, **caractérisée** en ce que la deuxième butée (7), ainsi que le gradin de perçage (9), qui présente la plus petite section d'ouverture, centrent l'aiguille de soupape (1) dans l'induit d'aimant (2) sur pratiquement toute la longueur de l'induit d'aimant.

4. Soupape électromagnétique selon au moins une des revendications précédentes, **caractérisée** en ce que tant la plus petite section d'ouverture dans l'induit d'aimant (2) que la deuxième butée (7) s'engagent autour de l'aiguille de soupape (1) sur une petite surface, de préférence en forme de rondelle.

5. Soupape électromagnétique selon au moins une des revendications 1 à 4, **caractérisée** en ce que la deuxième butée (7) peut être déplacée dans le perçage à gradin (8) au moyen d'un outil de réglage, et en ce qu'elle peut être fixée au moyen d'une force radiale enserrant l'induit d'aimant (2).

6. Soupape électromagnétique selon au moins une des revendications précédentes, **caractérisée** en ce que la première butée (6) peut être déplacée sur l'aiguille de soupape (1) et peut être fixée en position sur l'aiguille de soupape (1) au moyen d'un outil de pression.
